# FASCICULE DE BREVET EUROPEEN

(11) **EP 4 455 540 B1**
(45) Date de publication et mention de la délivrance du brevet: **29.10.2025**
(21) Numéro de dépôt: 24157979.6
(22) Date de dépôt: 15.02.2024
(51) Int. Cl.: F17C 13/00

(54) **CUVE ÉTANCHE ET THERMIQUEMENT ISOLANTE COMPRENANT UNE GAINE RIGIDE CREUSE POUR LE PASSAGE DE CÂBLES ÉLECTRIQUES**
ABGEDICHTETER UND THERMISCH ISOLIERENDER BEHÄLTER MIT EINEM STARREN HOHLMANTEL FÜR DEN DURCHGANG VON ELEKTRISCHEN KABELN
SEALED AND THERMALLY INSULATING TANK COMPRISING A HOLLOW RIGID SHEATH FOR THE PASSAGE OF ELECTRICAL CABLES

(30) Priorité: 26.04.2023 FR 2304203
(43) Date de publication de la demande: 30.10.2024
(73) Titulaire: Gaztransport et Technigaz, 78470 Saint-Rémy-lès-Chevreuse (FR)
(72) Inventeur: LEROUX, Nicolas, 78470 Saint-Rémy-lès-Chevreuse, (FR); BARDIN, Florian, 78470 Saint-Rémy-lès-Chevreuse, (FR); MAKOUDI, Hicham, 78470 Saint-Rémy-lès-Chevreuse, (FR); GARCIA ALDA, Victor, 78470 Saint-Rémy-lès-Chevreuse, (FR)
(74) Mandataire: Metz, Gaëlle

(56) Documents cités:
- WO-A1-2019/211550
- KR-A- 20100 103 266
- KR-A- 20140 041 065
- KR-A- 20150 015 731

## Description

### Domaine technique

L'invention se rapporte au domaine des cuves étanches et thermiquement isolantes, à membranes. En particulier, l'invention se rapporte au domaine des cuves étanches et thermiquement isolantes pour le stockage et/ou le transport de gaz liquéfié à basse température, telles que des cuves pour le transport de Gaz de Pétrole Liquéfié (aussi appelé GPL) présentant par exemple une température comprise entre -50°C et 0°C, ou pour le transport de Gaz Naturel Liquéfié (GNL) à environ -162°C à pression atmosphérique.

L'invention se rapporte plus précisément aux cuves installées sur un ouvrage flottant. Dans le cas d'un ouvrage flottant, la cuve peut être destinée au transport de gaz liquéfié ou à recevoir du gaz liquéfié servant de carburant pour la propulsion de l'ouvrage flottant.

### Arrière-plan technologique

Dans le cas d'une cuve installée sur un ouvrage flottant, il est nécessaire de prévoir une pompe pour charger la cuve de gaz liquéfié ou décharger la cuve.

Il est connu d'intégrer la pompe à une tour de chargement/déchargement située dans un espace interne de la cuve, la pompe étant alimentée en électricité depuis une source de puissance électrique située à l'extérieur de la cuve. Les câbles électriques servant à acheminer la puissance électrique jusqu'à la pompe sont reçus dans une gaine rigide. La gaine est constituée de tronçons métalliques de forme parallélépipédique, ces tronçons étant boulonnés les uns aux autres.

Avec cette solution, plusieurs centaines de boulons peuvent être nécessaires à l'assemblage de la gaine. L'assemblage de la gaine est alors peu efficace, car le boulonnage nécessite des précautions de montage et des vérifications longues et fastidieuses. La même problématique apparaît lorsqu'une opération de maintenance de la gaine est nécessaire, puisqu'une telle maintenance nécessite de défaire puis refaire au moins une partie du boulonnage.

Un autre inconvénient de cette solution est que l'assemblage de la gaine au moyen de boulons est peu résistant aux impacts, et notamment aux impacts dus au ballottement (ou « sloshing » en anglais) de gaz liquéfié dans la cuve. En pratique, on est souvent contraint de positionner la gaine dans la cuve de telle sorte que la gaine soit aussi peu exposée que possible aux impacts dus au ballottement, ce qui est encore un autre inconvénient. Le document WO 2019/211550 décrit un exemple de cuve ancrée dans une structure porteuse d'un navire comportant une tour de chargement/déchargement.

### Résumé

Une idée à la base de l'invention est de remédier à au moins certains des inconvénients précités.

Selon un mode de réalisation, l'invention fournit une cuve étanche et thermiquement isolante, la cuve étant ancrée dans une structure porteuse d'un navire, la cuve comportant une tour de chargement/déchargement, la tour de chargement/déchargement comportant au moins un mât, le au moins un mât s'étendant verticalement dans un espace interne de la cuve,
la cuve comportant en outre au moins une pompe, la pompe étant solidaire de la tour de chargement/déchargement et comportant un boîtier d'alimentation électrique, et une gaine rigide s'étendant verticalement, la gaine rigide étant creuse et recevant au moins un câble électrique connecté au boîtier d'alimentation électrique,
la gaine rigide comprenant une pluralité de tronçons alignés verticalement et fixés à la tour de chargement/déchargement, chaque dit tronçon étant tubulaire et étant séparé d'un tronçon adjacent d'un premier jeu.

La gaine rigide est ainsi réalisée sans fixer les tronçons les uns aux autres, et notamment sans boulonnage, ce qui améliore très sensiblement la résistance de la gaine aux impacts dus au ballottement. En outre, l'assemblage de la cuve est intéressant du point de vue économique et industriel puisqu'il ne nécessite pas de fixation des tronçons les uns aux autres, par boulonnage, par soudage ou autres.

Par « tubulaire », on entend que le tronçon présente une section transversale annulaire creuse. Un tel tronçon peut alors être choisi dans une gamme standard de tuyaux, ce qui facilite l'assemblage de la gaine rigide. En outre, la forme extérieure des tronçons étant de section circulaire, les tronçons présentent un coefficient de traînée hydrodynamique inférieur à celui de tronçons de forme extérieure parallélépipédique. Ceci améliore encore la résistance de la gaine rigide aux impacts dus au ballottement, puisqu'un impact de gaz liquéfié identique applique un effort mécanique moins important à la gaine rigide.

La gaine rigide peut ainsi être positionnée librement dans la cuve, car il n'est plus nécessaire que la gaine rigide soit dans une position qui tend à l'abriter du ballottement. C'est pourquoi l'on peut par exemple disposer la gaine rigide au-dessus du boîtier d'alimentation électrique comme cela sera décrit ci-dessous.

Selon des modes de réalisation, une telle cuve étanche et thermiquement isolante peut comporter une ou plusieurs des caractéristiques suivantes.

Selon un mode de réalisation, la tour de chargement/déchargement comporte un unique mât, et chaque dit tronçon est fixé au mât.

Selon un autre mode de réalisation, la tour de chargement/déchargement comporte un premier, un deuxième et un troisième mâts, espacés les uns des autres, et la tour de chargement/déchargement comporte en outre des traverses fixant les mâts les uns aux autres, et chaque dit tronçon est fixé à au moins deux traverses.

Selon un mode de réalisation, les tronçons métalliques sont en un alliage métallique, tel que de l'acier inoxydable.

Selon un mode de réalisation, la gaine rigide s'étend verticalement au-dessus du boîtier d'alimentation électrique. En d'autres termes, en vue de dessus parallèlement à la direction verticale des mâts et de la gaine rigide, la section transversale annulaire creuse des tronçons est au moins en partie incluse dans le contour extérieur du boîtier d'alimentation électrique. Ceci tend à minimiser la longueur de câble électrique nécessaire à la connexion électrique avec le boîtier d'alimentation électrique, et tend en outre à simplifier l'assemblage de la cuve, notamment parce que la gaine rigide peut être dépourvue de portions coudées, qui sinon pourraient être nécessaires pour faire cheminer ledit au moins un câble électrique jusqu'au boîtier d'alimentation électrique à travers la gaine rigide.

Selon un mode de réalisation, le premier mât et le deuxième mât sont situés dans un premier plan transversal, et le troisième mât est situé dans un deuxième plan transversal parallèle au premier plan transversal. Autrement dit, les mâts définissent un prisme à section triangulaire.

Selon un mode de réalisation, le premier plan transversal et le deuxième plan transversal sont orthogonaux à une direction longitudinale du navire.

Selon un mode de réalisation, le deuxième plan transversal est situé plus en avant que le premier plan transversal suivant la direction longitudinale du navire.

Selon un mode de réalisation, la gaine rigide est située entre le premier plan transversal et le deuxième plan transversal.

Comme on l'a mentionné ci-dessus, il n'est plus nécessaire que la gaine rigide soit dans une position qui tend à l'abriter du ballottement. Ainsi, un tel positionnement de la gaine rigide est réalisable sans compromettre la durée de vie de la gaine rigide.

Selon un mode de réalisation, la tour de chargement/déchargement comporte en outre des traverses fixant les mâts les uns aux autres, et chaque dit tronçon est fixé à au moins deux traverses.

Ainsi, la gaine rigide contribue à la rigidité structurelle de la tour de chargement/déchargement, et notamment à la résistance de cette dernière aux impacts dus au ballottement.

Selon un mode de réalisation, le premier jeu est compris entre 5 mm et 50 mm, préférentiellement entre 5 mm et 20 mm lorsque la cuve est à l'équilibre thermique à 20°C.

En choisissant une telle valeur du premier jeu, les tronçons peuvent constituer ensemble la gaine rigide en ne laissant découverte qu'une très petite partie du câble électrique.

Selon un mode de réalisation, une extrémité de la gaine rigide en regard du boîtier d'alimentation électrique est séparée du boîtier d'alimentation électrique d'un deuxième jeu, le deuxième jeu étant compris entre 20 mm et 200 mm lorsque la cuve est à l'équilibre thermique à 20°C.

Ainsi, il est aisé de réaliser la connexion électrique avec le boîtier d'alimentation électrique, puisqu'il subsiste un espace libre qui permet à un opérateur de manipuler ledit au moins un câble électrique.

Selon un mode de réalisation, la gaine rigide traverse une paroi de plafond de la structure porteuse et débouche dans une pièce de raccord creuse au-dessus de la paroi de plafond, et la gaine rigide reçoit en outre :
- N dispositifs de support de câble espacés, ledit au moins un câble électrique traversant chacun des N dispositifs de support de câble, et chaque dispositif de support de câble présentant une plus grande dimension extérieure qui est strictement inférieure à un plus grand diamètre intérieur de la gaine rigide ;
- N-1 câbles de support accrochés entre les N dispositifs de support de câble, où N est un nombre entier supérieur ou égal à 2 ; et
- un câble de support terminal tendu entre un point d'accrochage situé dans la pièce de raccord creuse et le dispositif de support de câble le plus proche de la pièce de raccord creuse.

Selon un mode de réalisation, la pièce de raccord creuse comprend un raccord en T, le raccord en T comportant une première branche dans le prolongement de la gaine rigide et une deuxième branche orientée perpendiculairement ou obliquement à la gaine rigide, le point d'accrochage est situé dans la première branche, et ledit au moins un câble électrique traverse la pièce de raccord creuse en sortant par la deuxième branche.

Selon un mode de réalisation, l'invention fournit aussi un procédé d'assemblage pour assembler une cuve étanche et thermiquement isolante, le procédé d'assemblage comprenant les étapes de :
A) ancrer la cuve dans une structure porteuse qui est intégrée dans un navire ;
B) dans un espace interne de la cuve, installer :
   - une tour de chargement/déchargement comportant au moins un mât, le au moins un mât s'étendant verticalement dans un espace interne de la cuve, et
   - au moins une pompe, la pompe étant solidaire de la tour de chargement/déchargement et comportant un boîtier d'alimentation électrique, et une gaine rigide s'étendant verticalement, la gaine rigide étant creuse et recevant au moins un câble électrique connecté au boîtier d'alimentation électrique, la gaine rigide comprenant une pluralité de tronçons alignés verticalement et fixés à la tour de chargement/déchargement, chaque dit tronçon étant tubulaire et étant séparé d'un tronçon adjacent d'un premier jeu ;
C) connecter ledit au moins un câble électrique au boîtier d'alimentation électrique.

Ce procédé d'assemblage permet d'obtenir la cuve étanche et thermiquement isolante décrite ci-dessus, avec les mêmes avantages. Ces avantages ne sont pas répétés par souci de concision. Il est bien évident qu'une caractéristique décrite en rapport avec la cuve est applicable au procédé d'assemblage et vice versa.

Selon un mode de réalisation, la tour de chargement/déchargement comporte un unique mât, et l'étape B) comprend fixer chaque tronçon au mât.

Selon un autre mode de réalisation, la tour de chargement/déchargement comporte un premier, un deuxième et un troisième mâts, espacés les uns des autres, la tour de chargement/déchargement comporte en outre des traverses fixant les mâts les uns aux autres, et l'étape B) comprend fixer chaque tronçon à au moins deux traverses.

Selon un mode de réalisation, l'étape B) comprend faire traverser à la gaine rigide une paroi de plafond de la structure porteuse, et faire déboucher la gaine rigide dans une pièce de raccord creuse au-dessus de la paroi de plafond ;
- installer N dispositifs de support de câble espacés sur ledit au moins un câble électrique, ledit au moins un câble électrique traversant chacun des N dispositifs de support de câble, et chaque dispositif de support de câble présentant une plus grande dimension extérieure qui est strictement inférieure à un plus grand diamètre intérieur de la gaine rigide, et accrocher N-1 câbles de support entre les N dispositifs de support de câble, où N est un nombre entier supérieur ou égal à 2 ;
- insérer ledit au moins un câble électrique muni des N dispositifs de support de câble dans la gaine rigide ; et
- accrocher un câble de support terminal à un point d'accrochage situé dans la pièce de raccord creuse et au dispositif de support de câble le plus proche de la pièce de raccord creuse.

Ainsi, il est aisé d'insérer ledit au moins un câble électrique dans la gaine rigide. En outre, le câble de support terminal est tendu entre le point d'accrochage et le dispositif de support de câble le plus proche de la pièce de raccord creuse, sous l'effet de la force de gravité s'appliquant à ce dispositif de support de câble. Ceci tend à mieux maintenir ledit au moins un câble électrique en position dans la gaine rigide, en particulier si les câbles de support sont également tendus entre les dispositifs de support de câble.

Selon un mode de réalisation, le procédé d'assemblage selon l'invention comprend, préalablement à l'étape B) une étape d'installation du au moins un câble électrique dans la gaine rigide, préférentiellement lorsque la tour de chargement/déchargement est en position horizontale.

Dans une variante, l'étape d'installation du au moins un câble électrique dans la gaine rigide comprend :
- Insérer le au moins un câble électrique et N-1 câbles de support dans la gaine rigide, où N est un nombre entier supérieur ou égal à 2 ;
- Insérer, au droit de N ouvertures de la gaine rigide, N dispositifs de support de câble espacés sur ledit au moins un câble électrique, ledit au moins un câble électrique traversant chacun des N dispositifs de support de câble, et chaque dispositif de support de câble présentant une plus grande dimension extérieure strictement inférieure à un plus grand diamètre intérieur de la gaine rigide, et accrocher les N-1 câbles de support entre les N dispositifs de support de câble ;
et après l'étape B), la gaine rigide débouchant dans une pièce de raccord creuse au-dessus d'une paroi de plafond de la structure porteuse, une étape d'accrocher un câble de support terminal à un point d'accrochage situé dans la pièce de raccord creuse et au dispositif de support de câble le plus proche de la pièce de raccord creuse.

Dans une variante, les N ouvertures de la gaine rigide sont formées par le premier jeu entre deux tronçons adjacents.

Selon un mode de réalisation, le procédé d'assemblage comprend :
- préalablement à l'étape d'insérer, au droit de N ouvertures de la gaine rigide, N dispositifs de support de câble et N-1 câbles de support, une étape de création des N ouvertures de la gaine rigide ;
- après l'étape d'accrocher les N-1 câbles de support, une étape de fermeture des N ouvertures de la gaine rigide.

Selon un mode de réalisation, l'étape d'insérer le au moins un câble électrique et les N-1 câbles de support dans la gaine rigide comprend une étape de tirage du au moins un câble électrique et des et N-1 câbles de support à travers au moins une des N ouvertures.

Selon un mode de réalisation, le procédé d'assemblage comprend en outre, après l'étape d'accrocher les N-1 câbles de support, une étape de maintien des extrémités du au moins un câble électrique.

Selon un mode de réalisation, la pièce de raccord creuse comprend un raccord en T, le raccord en T comportant une première branche dans le prolongement de la gaine rigide et une deuxième branche orientée perpendiculairement ou obliquement à la gaine rigide, le point d'accrochage est situé dans la première branche, et à l'étape B), ledit au moins câble électrique muni des N dispositifs de support de câble est inséré dans la gaine rigide par la première branche, puis une extrémité du câble électrique opposée au boîtier d'alimentation électrique est extraite de la pièce de raccord creuse par la deuxième branche.

Selon un mode de réalisation, le procédé d'assemblage comprend en outre obturer la première branche après avoir inséré ledit au moins un câble électrique muni des N dispositifs de support de câble dans la gaine rigide.

Ceci tend à mieux assurer l'étanchéité de la cuve, notamment en évitant des fuites du gaz liquéfié contenu dans la cuve via la gaine rigide. L'obturateur employé pour obturer la première branche peut être amovible de façon à permettre un accès à la gaine rigide pour la maintenance de la gaine rigide.

Selon un mode de réalisation, à l'issue de l'étape B), une extrémité de la gaine rigide en regard du boîtier d'alimentation électrique est séparée du boîtier d'alimentation électrique d'un deuxième jeu.

Dans un mode de réalisation, le gaz liquéfié est du GNL, à savoir un mélange à forte teneur en méthane stocké à une température d'environ -162°C à la pression atmosphérique. D'autres gaz liquéfiés peuvent aussi être envisagés, notamment l'éthane, le propane, le butane ou l'éthylène, ou encore l'ammoniac ou l'hydrogène. Des gaz liquéfiés peuvent aussi être stockés sous pression, par exemple à une pression relative comprise entre 2 et 20 bar, et en particulier à une pression relative voisine de 2 bar. La cuve peut être réalisée selon différentes techniques, notamment sous la forme d'une cuve intégrée à membrane ou d'une cuve autoporteuse.

Selon un mode de réalisation, la structure porteuse du navire est formée par une double coque du navire. Le navire peut notamment être un navire méthanier, une unité flottante de stockage et de regazéification (FSRU), une unité flottante de production et de stockage déporté (FPSO) et autres. La cuve peut aussi servir de réservoir de carburant dans tout type de navire.

Selon un mode de réalisation, un navire pour le transport d'un gaz liquéfié comporte une double coque et une cuve précitée disposée dans la double coque.

Selon un mode de réalisation, l'invention fournit aussi un système de transfert pour un gaz liquéfié, le système comportant le navire précité, des canalisations isolées agencées de manière à relier la cuve installée dans la coque du navire à une installation de stockage flottante ou terrestre et une pompe pour entraîner un flux de gaz liquéfié à travers les canalisations isolées depuis ou vers l'installation de stockage flottante ou terrestre vers ou depuis la cuve du navire.

Selon un mode de réalisation, l'invention fournit aussi un procédé de chargement ou déchargement d'un tel navire, dans lequel on achemine un gaz liquéfié à travers des canalisations isolées depuis ou vers une installation de stockage flottante ou terrestre vers ou depuis la cuve du navire.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig. 1] La figure 1 est une vue schématique d'une cuve étanche et thermiquement isolante ancrée dans une structure porteuse d'un navire, en coupe suivant un plan longitudinal du navire, la cuve étant équipée d'une tour de chargement/déchargement.
[Fig. 2] La figure 2 est une vue schématique de dessus de la tour de chargement/déchargement.
[Fig. 3] La figure 3 est une vue partielle en perspective de la tour de chargement/déchargement, ensemble avec une gaine rigide solidaire de la tour de chargement/déchargement.
[Fig. 4] La figure 4 est une vue agrandie du détail A de la figure 1.
[Fig. 5] La figure 5 est une vue en perspective d'un dispositif de support de câble destiné à être inséré dans la gaine rigide.
[Fig. 6] La figure 6 est une vue en perspective du dispositif de support de câble de la figure 5, traversé par des câbles électriques et relié à des câbles de support.
[Fig. 7] La figure 7 est une vue plane de plusieurs dispositifs de support de câble du type représenté sur la figure 6.
[Fig. 8] La figure 8 est une vue agrandie du détail B de la figure 1, illustrant l'insertion des câbles électriques dans la gaine rigide à l'aide des dispositifs de support de câble.
[Fig. 9] La figure 9 est une vue agrandie du détail C de la figure 8.
[Fig. 10] La figure 10 est une représentation schématique écorchée d'une cuve de navire méthanier et d'un terminal de chargement/déchargement de cette cuve.

### Description des modes de réalisation

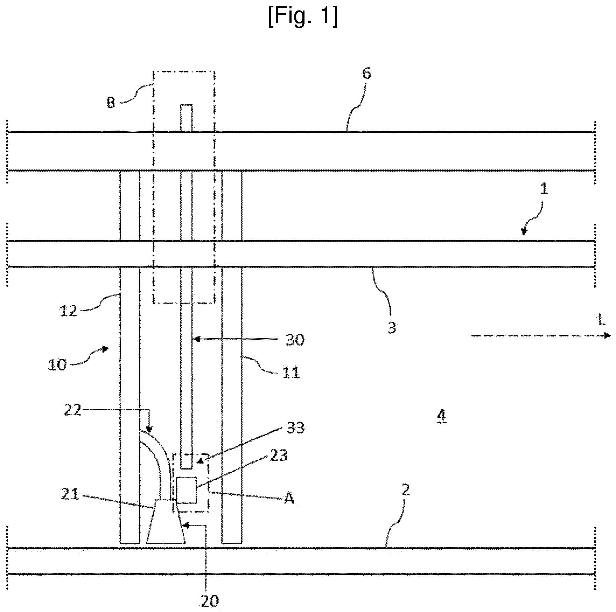

Sur la figure 1, on a représenté schématiquement en coupe une cuve 1 étanche et thermiquement isolante. La cuve 1 est ancrée dans une structure porteuse d'un navire. La structure porteuse comprend notamment une paroi porteuse de fond 2 et une paroi porteuse de plafond 3. Par exemple la structure porteuse est formée par la double coque du navire.

Selon un mode de réalisation, la cuve 1 est une cuve à membranes. Dans une telle cuve 1, chaque paroi de cuve présente une structure multicouche comportant, depuis l'extérieur vers l'intérieur, une barrière thermiquement isolante secondaire comportant des éléments isolants reposant contre la structure porteuse, une membrane d'étanchéité secondaire reposant contre la barrière thermiquement isolante secondaire, une barrière thermiquement isolante primaire comportant des éléments isolants, non représentés, reposant contre la membrane d'étanchéité secondaire et une membrane d'étanchéité primaire destinée à être en contact avec le gaz liquéfié contenu dans la cuve 1. La membrane d'étanchéité primaire définit un espace interne 4 destiné à recevoir un gaz liquéfié. A titre d'exemple, de telles cuves à membranes sont notamment décrites dans les demandes de brevet WO14057221, FR2691520 et FR2877638 visant respectivement les technologies Mark V, Mark III et NO96 développées par la demanderesse.

Le gaz liquéfié destiné à être stocké dans la cuve 1 peut notamment être un gaz naturel liquéfié (GNL), c'est-à-dire un mélange gazeux comportant majoritairement du méthane ainsi qu'un ou plusieurs autres hydrocarbures. Le gaz liquéfié peut également être de l'éthane ou un gaz de pétrole liquéfié (GPL), c'est-à-dire un mélange d'hydrocarbures issu du raffinage du pétrole comportant essentiellement du propane et du butane. Le gaz liquéfié peut également être de l'ammoniac ou de l'hydrogène.

La cuve 1 est équipée d'une tour de chargement/déchargement 10, ci-après désignée par « la tour 10 » par commodité. La tour 10 permet notamment de charger le gaz liquéfié dans la cuve 1 ou de le décharger. Pour cela, la tour 10 comporte au moins une pompe 20. La pompe 20 comporte un corps de pompe 21 relié à une conduite 22. La conduite 22 peut par exemple s'étendre jusqu'à un pont supérieur 6 du navire, le pont supérieur 6 étant situé au-dessus de la paroi de plafond 3. Lorsque l'on souhaite décharger la cuve 1, la pompe 20 est mise en fonctionnement, et le gaz liquéfié est aspiré par le corps de pompe 21 dans la conduite 22, puis transféré via la conduite 22 jusqu'à un équipement de chargement/déchargement de gaz liquéfié.

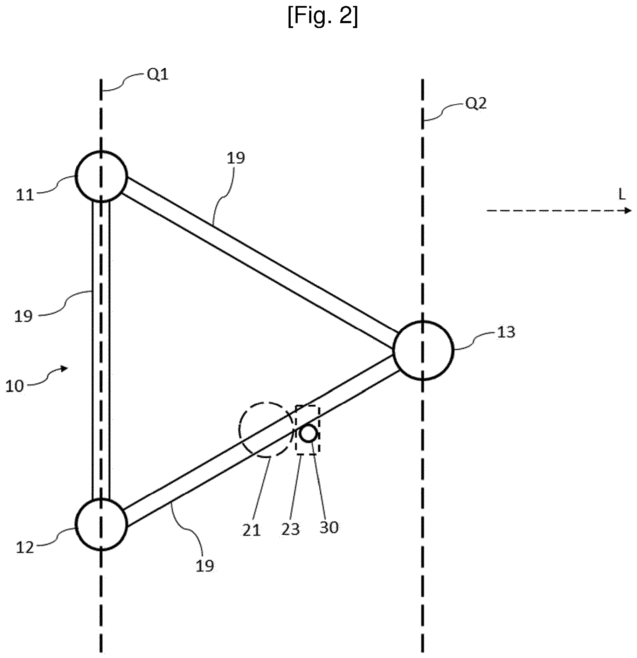

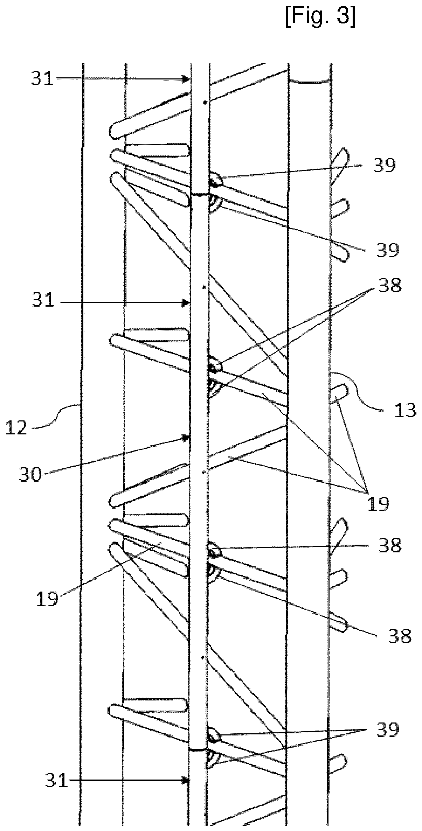

En référence maintenant à la figure 1, la figure 2 et la figure 3, la tour 10 s'étend dans l'espace interne 4 de la cuve 1 sur sensiblement toute la hauteur de la cuve 1. La tour 10 comporte une structure tripode, c'est-à-dire que la tour 10 comporte des mâts 11, 12, 13 espacés, parallèles entre eux, et s'étendant verticalement dans l'espace interne 4. Les mâts 11, 12, 13 sont reliés entre eux par des traverses 19 (cf. figure 2, figure 3) contribuant à la rigidité mécanique de la tour 10. De manière générale, l'invention s'applique à une tour de chargement/déchargement comportant au moins un mât.

La pompe 20 est solidaire de la tour 10, par exemple en étant solidaire d'une base non représentée de la tour 10, la base étant située à l'extrémité de la tour 10 qui est voisine de la paroi porteuse de fond 2. Selon des modes de réalisation, le corps de pompe 21 est reçu dans un puisard aménagé dans la paroi de fond de la cuve 1 qui est supportée par la paroi porteuse de fond 2.

La pompe 20 est électrique et comporte un boîtier d'alimentation électrique 23 (ci-après désigné par « le boîtier 23 »). En service, la pompe 20 est le plus souvent immergée dans le gaz liquéfié contenu dans la cuve 1. Pour alimenter la pompe 20 en électricité, il convient donc d'acheminer de la puissance électrique d'une source de puissance électrique située à l'extérieur de la cuve 1 jusqu'au boîtier 23. Pour cela, la tour 10 comporte une gaine rigide 30 (ci-après désignée par « la gaine 30 ») qui va maintenant être décrite. La gaine 30 est creuse et reçoit des câbles électriques 41 connectés au boîtier 23.

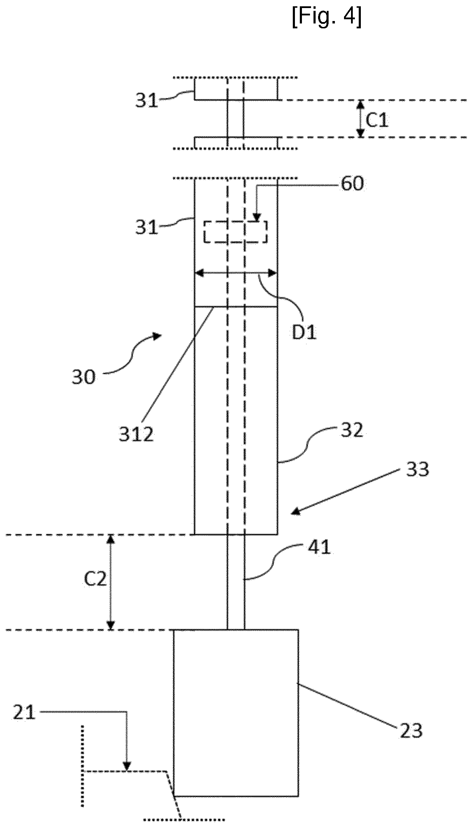

En référence à la figure 3 et à la figure 4, la gaine 30 comprend une pluralité de tronçons 31. Chaque tronçon 31 est tubulaire, c'est-à-dire que le tronçon 31 présente une section transversale annulaire creuse. Par exemple les tronçons 31 sont des tubes réalisés en un alliage métallique capable de résister à la température basse du gaz liquéfié, par exemple de l'acier inoxydable.

Les tronçons 31 présentent des diamètres intérieurs D1 (cf. figure 4) identiques. Le diamètre intérieur D1 est avantageusement choisi dans une gamme standard de diamètres de tuyaux, par exemple la gamme DN (diamètre nominal) définie par la norme ISO 6708. Dans un exemple, les tronçons 31 sont choisis avec un diamètre nominal DN 150.

Dans le cas où la tour de chargement/déchargement comprend un unique mât, chaque dit tronçon 31 est fixé au mât. Dans le cas où la tour de chargement/déchargement 10 comprend un premier, un deuxième et un troisième mâts 11, 12, 13, espacés les uns des autres, la tour de chargement/déchargement 10 comporte en outre des traverses 19 fixant les mâts 11, 12, 13 les uns aux autres, et chaque dit tronçon 31 est fixé à au moins deux traverses 19. Dans ce qui suit, la description de l'invention sera basée sur le cas où la tour 10 comporte trois mâts, mais il est bien entendu que l'invention s'applique de façon analogue quel que soit le nombre de mâts.

En référence maintenant à la figure 3, les tronçons 31 sont alignés verticalement, c'est-à-dire parallèlement aux mâts 11, 12, 13. Plus concrètement, chaque extrémité de chaque tronçon 31 est fixée à une traverse 19 via un élément de fixation 39. Par exemple l'élément de fixation 39 est réalisé en un alliage métallique et est soudé au tronçon 31 et à la traverse 19. Chaque tronçon 31 peut en outre être fixé à une ou plusieurs autres traverses 19 via des éléments de fixation 38. Les éléments de fixation 38 sont analogues aux éléments de fixation 39. Par exemple les éléments de fixation 38 sont réalisés en un alliage métallique et sont chacun soudés à un tronçon 31 et à une traverse 19. Les éléments de fixation 38, 39 peuvent être courbes comme représenté sur la figure 3 ou bien avoir d'autres géométries.

Les tronçons 31 sont fixés aux traverses 19 de telle sorte que chaque tronçon 31 est séparé d'un tronçon 31 adjacent d'un jeu C1 (cf. figure 4) non nul. Le jeu C1 est compris entre 5 mm et 20 mm, par exemple égal à 10 mm, lorsque la cuve 1 est à l'équilibre thermique à 20°C. En choisissant une telle valeur du jeu C1, les tronçons 31 peuvent constituer ensemble la gaine 30 en ne laissant découverte qu'une très petite partie des câbles électriques 41 ; et il n'est pas nécessaire de fixer les tronçons 31 les uns aux autres (par exemple par soudage ou boulonnage) pour constituer la gaine 30, ce qui est intéressant du point de vue économique et industriel.

Dans l'exemple représenté sur la figure 1, la figure 2 et la figure 4, la gaine 30 s'étend verticalement au-dessus du boîtier 23. En d'autres termes, en vue de dessus parallèlement à la direction verticale des mâts 11, 12, 13 et de la gaine 30, la section transversale annulaire creuse des tronçons 31 est incluse dans le contour extérieur du boîtier 23, entièrement (comme représenté sur la figure 2) ou bien partiellement. Ceci tend à minimiser la longueur de câble électrique 41 nécessaire à la connexion électrique avec le boîtier 23, et tend en outre à simplifier l'assemblage de la cuve 1, notamment parce que la gaine 30 peut être dépourvue de portions coudées qui sinon pourraient être nécessaires pour faire cheminer les câbles électriques 41 jusqu'au boîtier 23 à travers la gaine 30.

En référence à la figure 4, une extrémité inférieure 33 de la gaine 30 en regard du boîtier 23 est séparée du boîtier 23 d'un jeu C2 non nul. Le jeu C2 est compris entre 20 mm et 200 mm lorsque la cuve 1 est à l'équilibre thermique à 20°C. Ainsi, il est aisé de réaliser la connexion électrique des câbles électriques 41 avec le boîtier 23, puisqu'il subsiste un espace libre entre l'extrémité inférieure 33 et le boîtier 23 qui permet à un opérateur de manipuler les câbles électriques 41. On précise ici que bien que la figure 4 montre un câble électrique 41 connecté au boîtier 23 au niveau d'une face du boîtier 23 en regard de la gaine 30, la connexion électrique des câbles électriques 41 avec le boîtier 23 peut être positionnée différemment, notamment à l'intérieur du boîtier 23 et/ou au niveau d'une autre face du boîtier 23.

Selon un mode de réalisation, comme représenté sur la figure 4, l'extrémité inférieure 33 de la gaine 30 est matérialisée par un tronçon terminal 32, de même diamètre que les tronçons 31 mais de longueur plus petite. Le tronçon terminal 32 est fixé en 312 à un tronçon 31 adjacent. De préférence, la fixation 312 du tronçon terminal 32 est amovible, ce qui permet de démonter le tronçon terminal 32 et découvrir une plus grande longueur de câble électrique 41, par exemple en vue d'une opération de maintenance de la pompe 20.

En référence à la figure 2, les mâts 11 et 12 sont situés dans un plan Q1, et le mât 13 est situé dans un plan Q2 parallèle et espacé du plan Q1. Selon un mode de réalisation, les plans Q1 et Q2 sont orthogonaux à une direction longitudinale L du navire. Plus particulièrement, comme représenté sur les figures 1 et 2, le plan Q2 est situé plus près de la proue du navire, autrement dit plus en avant suivant la direction longitudinale L orientée vers la proue du navire, que le plan Q1.

Comme on l'a mentionné ci-dessus, la gaine 30 est réalisée sans fixer les tronçons 31 les uns aux autres. Ceci améliore très sensiblement la résistance de la gaine 30 aux impacts, et notamment aux impacts dus au ballottement (ou « sloshing » en anglais) de gaz liquéfié dans la cuve 1, puisque la gaine 30 est dépourvue de fixations entre les tronçons 31 qui seraient plus susceptibles d'être endommagées par des impacts. Ceci permet de positionner librement la gaine 30 sur la tour 10 suivant la direction longitudinale L. En effet, la constitution de la gaine 30 sous forme de tronçons 31 tubulaires adjacents offre les avantages cités ci-dessus. Ainsi, et contrairement à ce qui est fait dans l'art antérieur mentionné ci-dessus, il n'est plus nécessaire que la gaine 30 soit dans une position qui tend à abriter la gaine 30 du ballottement. Notamment, comme représenté sur la figure 2, la gaine 30 peut être située entre les plans Q1 et Q2 suivant la direction longitudinale L plutôt qu'entre les mâts 11 et 12.

Comme représenté sur la figure 2, le mât 13 peut présenter un diamètre plus important que les mâts 11 et 12, par exemple afin de former un puits de secours permettant la descente d'une pompe de secours et d'une ligne de déchargement en cas de défaillance de la pompe 20.

En variante, les plans Q1 et Q2 peuvent ne pas être orthogonaux à la direction longitudinale L. Dans ce cas également, la gaine 30 peut être positionnée librement sur la tour 10.

On décrit maintenant un procédé d'assemblage de la cuve 1 équipée de la tour 10, de la pompe 20 et de la gaine 30.

Tout d'abord, on ancre la cuve 1 dans la structure porteuse selon les techniques connues.

Ensuite, dans l'espace interne 4 de la cuve 1, on installe la tour 10, la pompe 20 comportant le boîtier 23, et la gaine 30 munie des câbles électriques 41. Comme on l'a décrit ci-dessus, à l'issue de cette étape, l'extrémité inférieure 33 de la gaine 30 en regard du boîtier 23 est séparée du boîtier 23 du jeu C2.

Enfin, on connecte les câbles électriques 41 au boîtier 23.

Plusieurs ordres différents sont envisageables pour l'installation de la tour 10, de la pompe 20 comportant le boîtier 23, et de la gaine 30 munie des câbles électriques 41 dans l'espace interne 4 de la cuve 1.

Dans un exemple, on installe dans un premier temps la tour 10 et la pompe 20 comportant le boîtier 23. Dans un second temps, on fournit les tronçons 31, et on fixe les tronçons 31 à la tour 10 comme on l'a décrit ci-dessus, de telle sorte que les tronçons 31 sont alignés verticalement et que chaque tronçon 31 est séparé d'un tronçon 31 adjacent du premier jeu C1. Les tronçons 31 ainsi alignés forment au moins une partie de la gaine 30. Enfin, dans un troisième temps, on fait cheminer un ou plusieurs câbles électriques 41 à travers la gaine 30 jusqu'au boîtier 23, et on connecte les câbles électriques 41 au boîtier 23.

Dans un autre exemple, la tour 10 est installée dans l'espace interne 4 de la cuve 1 après avoir fixé les tronçons 31 à la tour 10, et on fait cheminer les câbles électriques 41 à travers la gaine 30 après avoir installé la tour 10.

Dans encore un autre exemple, la tour 10 est installée dans l'espace interne 4 après avoir fixé les tronçons 31 à la tour 10 et après avoir fait cheminer les câbles électriques 41 à travers la gaine 30. Dans cet exemple, le procédé d'assemblage comprend donc une étape d'installation du ou des câbles électriques 41 dans la gaine rigide 30, préférentiellement lorsque la tour de chargement/déchargement 10 est en position horizontale. Cet exemple d'installation à l'horizontal sera détaillé ci-après.

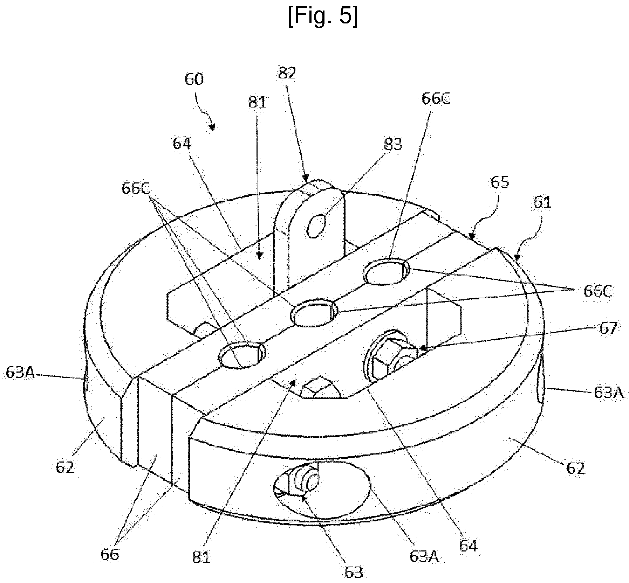

En référence aux figures 5 à 9, on décrit une façon avantageuse de faire cheminer les câbles électriques 41 à travers la gaine 30 jusqu'au boîtier 23.

Sur la figure 5, on a représenté en perspective un dispositif de support de câble 60. Le dispositif de support de câble 60 comporte un ensemble de support de câble 65 et une armature 61.

L'ensemble de support de câble 65 comprend deux pièces de support de câble 66. Chacune des deux pièces de support de câble 66 présente une gorge 66C pour chaque câble électrique 41. Les pièces de support de câble 66 sont fixées l'une à l'autre de telle sorte que les gorges 66C sont en regard deux à deux, et par là définissent ensemble un espace suffisant pour recevoir chaque câble électrique 41 comme on va le détailler ci-dessous. Les pièces de support de câble 66 sont ici fixées l'une à l'autre au moyen de deux boulons 67 ; en variante, les pièces de support de câble 66 peuvent être fixées l'une à l'autre d'autres manières.

L'armature 61 comprend deux pièces d'armature 62. Chacune des deux pièces d'armature 62 présente deux lumières 63A. Deux boulons 63 (dont un seul est visible sur la figure 5) sont reçus dans les lumières 63A et fixent ensemble les deux pièces d'armature 62 et les deux pièces de support de câble 66, de telle sorte que les deux pièces d'armature 62 prennent en sandwich les deux pièces de support de câble 66.

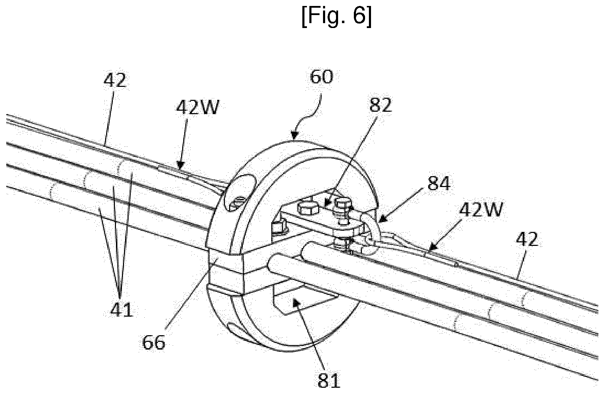

Chacune des deux pièces d'armature 62 comporte une lumière 64. Les lumières 64 sont positionnées de telle sorte que, lorsque les deux pièces d'armature 62 prennent en sandwich les deux pièces de support de câble 66, le dispositif de support de câble 60 présente deux espaces centraux 81, chaque espace central 81 étant formé par une lumière 64 et une pièce de support de câble 66 en regard. Comme cela est visible en particulier sur la figure 5, les espaces centraux 81 dégagent un espace suffisant pour les boulons 67. En outre, un espace central 81 reçoit une pièce d'accrochage de câble 82, visible sur la figure 5 et la figure 6.

La pièce d'accrochage de câble 82 est fixée, par exemple rapportée, à l'une des pièces de support de câble 66, de façon à s'étendre de part et d'autre de l'armature 61 et de l'ensemble de support de câble 65. En outre, la pièce d'accrochage de câble 82 présente, à chacune de ses deux extrémités, un trou traversant 83 (dont un seul est visible sur les dessins). Chacun des deux trous traversants 83 reçoit une manille 84 (dont une seule est visible sur la figure 6). Chacune des deux manilles 84 permet l'accrochage d'un câble de support 42. Dans l'exemple représenté, les câbles de support 42 sont des câbles en acier inoxydable, et chaque extrémité d'un câble de support 42 est enroulée autour de la manille 84 puis reçoit un point de soudure ou une autre fixation 42W pour empêcher le câble de support 42 de se dérouler.

En référence aux figures 6 à 9, on décrit maintenant l'utilisation des dispositifs de support de câble 60 pour faire cheminer les câbles électriques 41 à travers la gaine 30 jusqu'au boîtier 23.

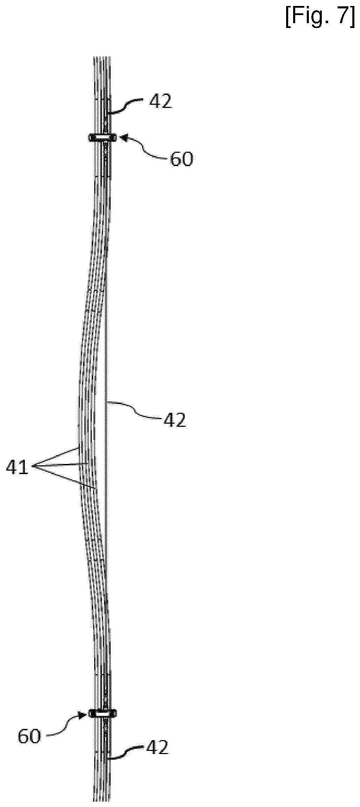

Un nombre souhaité N de dispositifs de support de câble 60 est installé sur les câbles électriques 41. Comme représenté sur la figure 6, chaque dispositif de support de câble 60 est installé de telle sorte que les câbles électriques 41 traversent les dispositifs de support de câble 60 en étant reçus dans les gorges 66C. En outre, comme représenté sur la figure 7, les dispositifs de support de câble 60 sont espacés sur les câbles électriques 41, et N-1 câbles de support 42 sont accrochés entre les N dispositifs de support de câble 60 au moyen des manilles 84.

N est un nombre entier supérieur ou égal à 2. La valeur de N est choisie notamment en fonction de la longueur de la gaine 30 et de la longueur souhaitée des câbles de support 42.

En référence aux figures 4, 8 et 9, les câbles électriques 41 munis des N dispositifs de support de câble 60 sont insérés dans la gaine 30, avec les N-1 câbles de support 42 accrochés entre les dispositifs de support de câble 60.

Comme cela est visible en particulier sur la figure 4, les dispositifs de support de câble 60 présentent une plus grande dimension qui est strictement plus petite que le diamètre D1 des tronçons 31. Ceci permet d'insérer les câbles électriques 41 munis des N dispositifs de support de câble 60 sans risquer que les dispositifs de support de câbles 60 soient coincés dans la gaine 30.

Les câbles électriques 41 munis des N dispositifs de support de câble 60 sont insérés dans la gaine 30 par un point d'entrée situé hors de la cuve 1.

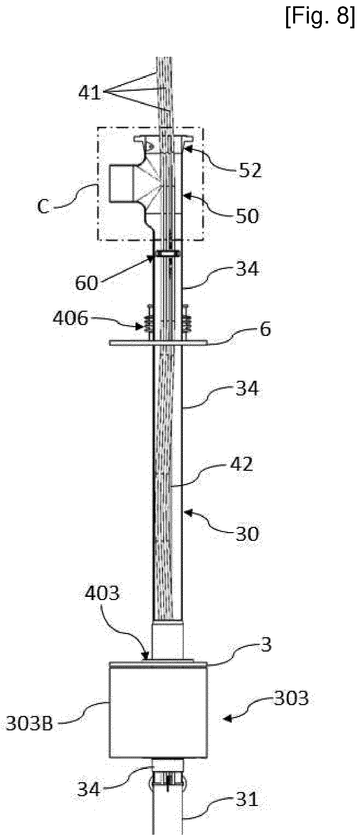

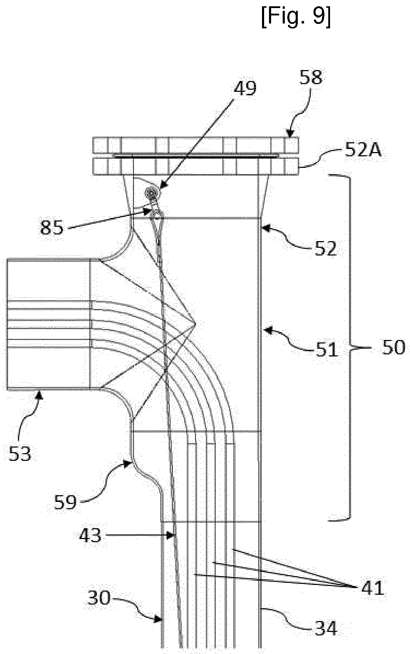

Dans l'exemple représenté sur les figures 8 et 9, la gaine 30 débouche dans une pièce de raccord creuse 50. Plus précisément, en référence à la figure 8, la gaine 30 traverse la paroi porteuse de plafond 3 et le pont supérieur 6 situé au-dessus de la paroi porteuse de plafond 3. Pour cela la gaine 30 comprend une conduite de traversée 34, et le tronçon 31 le plus proche de la paroi porteuse de plafond 3 est fixé, par exemple soudé, à la conduite de traversée 34. La conduite de traversée 34 traverse la paroi de cuve de plafond 303 supportée par la paroi porteuse de plafond 3, par exemple en traversant un ou des éléments isolants 303B de la paroi de cuve de plafond 303 ou bien un espace ménagé entre ces éléments isolants 303B, et traverse la paroi porteuse de plafond 3. En outre, la conduite de traversée 34 traverse le pont supérieur 6 jusqu'à déboucher dans la pièce de raccord creuse 50.

La conduite de traversée 34 peut être fixée à la paroi porteuse de plafond 3 du côté opposé à la paroi de cuve de plafond 303, par exemple en étant soudée à une collerette 403 soudée à la paroi porteuse de plafond 3. En outre, la conduite de traversée 34 peut être fixée au pont supérieur 6, par exemple en étant soudée à un conduit 406 soudé au pont supérieur 6. La conduite de traversée 34 peut être formée d'un seul tenant ou bien être formée par plusieurs tronçons analogues aux tronçons 31 fixés les uns aux autres.

En référence à la figure 9, la pièce de raccord creuse 50 comprend un raccord en T 51. Le raccord en T 51 comporte une première branche 52 dans le prolongement de la gaine 30, et une deuxième branche 53 orientée perpendiculairement à la gaine 30. En variante, la deuxième branche 53 peut être orientée obliquement mais non perpendiculairement à la gaine 30.

Dans l'exemple représenté, la conduite de traversée 34 présente un diamètre intérieur égal à D1, la première branche 52 et la deuxième branche 53 présentent un diamètre intérieur strictement supérieur à D1, et la pièce de raccord creuse 50 comprend une réduction (ou raccord réducteur ; en anglais : « reducer ») 59 entre la conduite de traversée 34 et le raccord en T 51. Dans l'exemple représenté, le raccord réducteur 59 est un réducteur excentrique (en anglais : « eccentric reducer »).

La première branche 52 matérialise le point d'entrée pour l'insertion des câbles électriques 41 munis des N dispositifs de support de câble 60 dans la gaine 30. Autrement dit, en référence à la figure 8, les câbles électriques 41 munis des N dispositifs de support de câble 60 sont insérés dans la gaine 30 en passant par la première branche 52.

En outre, un câble de support terminal 43 est accroché au dernier dispositif de support de câble 60 inséré dans la gaine 30, autrement dit au dispositif de support de câble 60 qui sera le plus proche du raccord en T 51 après avoir inséré les câbles électriques 41. L'accrochage du câble de support terminal 43 à ce dispositif de support de câble 60 peut être réalisé de façon analogue à l'accrochage des câbles de support 42 aux dispositifs de support de câble 60.

Après avoir inséré les câbles électriques 41 munis des N dispositifs de support de câble 60 dans la gaine 30, on fait cheminer les câbles électriques 41 à travers la gaine 30 jusqu'au boîtier 23, et on connecte les câbles électriques 41 au boîtier 23. Le câble de support terminal 43 est alors accroché à un point d'accrochage 49 situé dans la première branche 52. Par exemple le point d'accrochage 49 est matérialisé par une pièce d'accrochage soudée au raccord en T 51 dans la première branche 52, et le câble de support terminal 43 est accroché à cette pièce d'accrochage au moyen d'une manille 85 de façon analogue à l'accrochage des câbles de support 42 au moyen des manilles 84.

Lorsque le câble de support terminal 43 est accroché au point d'accrochage 49, le câble de support terminal 43 est tendu entre le point d'accrochage 49 et le dispositif de support de câble 60 (non représenté sur la figure 9) le plus proche du raccord en T 51, sous l'effet de la force de gravité s'appliquant à ce dispositif de support de câble 60.

La longueur du câble de support terminal 43, la longueur des câbles de support 42 et l'espacement entre les dispositifs de support de câble 60 peuvent être choisis de telle sorte que les câbles de support 42 sont alors tendus entre les dispositifs de support de câble 60, comme cela est visible sur la figure 7. Les câbles électriques 41 sont comprimés dans les gorges 66C, dans la limite admissible de compression des câbles électriques 41, et le cas échéant dans la limite admissible de compression des gaines de câble (en anglais : « cable jacket ») des câbles électriques 41. La longueur totale des câbles électriques 41 est par conséquent choisie de telle sorte que les câbles électriques 41 ne sont pas tendus entre les dispositifs de support de câble 60, comme représenté sur la figure 7. Ceci permet de ne pas trop solliciter en tension les câbles électriques 41, ce qui est bénéfique pour leur intégrité mécanique.

Plus précisément, la longueur totale des câbles électriques 41 est choisie de telle sorte que les câbles électriques 41 ne sont pas tendus entre les dispositifs de support de câble 60 à la température ambiante et à la température basse du gaz liquéfié, compte tenu des coefficients de contraction thermique respectifs des câbles de support 42 et des câbles électriques 41. Concrètement, entre deux dispositifs de support de câble 60 donnés, la longueur de câble électrique 41 est choisie supérieure à la longueur de câble de support 42. Puisque les dispositifs de support de câble 60 présentent une plus grande dimension qui est strictement plus petite que le diamètre D1 des tronçons 31, les dispositifs de support de câble 60 sont autorisés à se déplacer dans la gaine 30 lorsque les câbles électriques 41 et les câbles de support 42 se contractent thermiquement.

En revenant à la figure 9, les extrémités des câbles électriques 41 ainsi insérés dans la gaine 30 sont extraites de la pièce de raccord creuse 50 par la deuxième branche 53. Les câbles électriques 41 peuvent alors être connectés comme souhaité à un équipement électrique extérieur à la cuve 1, ce qui permet de terminer la connexion électrique du boîtier 23 et de la pompe 20.

En outre, la première branche 52 peut être obturée par un obturateur 58, tel qu'un capot. L'obturateur 58 est par exemple fixé à une bride d'extrémité 52A de la première branche 52. L'obturateur 58 tend à mieux assurer l'étanchéité de la cuve 1, notamment en évitant des fuites du gaz liquéfié contenu dans la cuve 1 via la gaine 30. L'obturateur 58 peut être fixé de façon amovible, par exemple par boulonnage à la bride d'extrémité 52A, afin de permettre un accès à la gaine 30 pour la maintenance de la gaine 30.

Bien que les dessins montrent le cheminement de trois câbles électriques 41 à travers la gaine 30, un nombre différent de câbles électriques 41 peut être employé si souhaité.

Les gorges 66C des pièces de support de câble 66 peuvent en alternative être en regard des lumières 64, notamment si un nombre important de câbles électriques 41 est employé. Dans ce cas, l'ensemble de support de câble 65 peut comporter une unique pièce de support de câble 66, des contre-platines étant rapportées à cette pièce de support de câble 66 pour comprimer les câbles électriques 41 dans les gorges 66C comme on l'a décrit ci-dessus. La pièce d'accrochage de câble 82 peut être rapportée à l'une de ces contre-platines.

Dans l'exemple représenté, les pièces de support de câble 66 et la pièce d'accrochage de câble 82 sont des platines planes en acier inoxydable, et les pièces d'armature 62 sont des pièces en polyéthylène haute densité, moulées ou usinées. En variante, d'autres géométries et/ou d'autres matériaux sont envisageables pour les pièces de support de câble 66 et/ou la pièce d'accrochage de câble 82 et/ou les pièces d'armature 62.

Tel que décrit ci-dessus, le procédé d'assemblage a été décrit lorsque la tour de chargement/déchargement est installée dans la cuve, à la verticale. En alternative, il est possible d'installer les câbles dans la gaine rigide préalablement à l'installation de la tour de chargement/déchargement dans la cuve. Dans cet exemple d'installation à l'horizontal, le procédé d'assemblage comprend, préalablement à l'étape de mise en place de la tour de chargement/déchargement dans la cuve, une étape d'installation du ou des câbles électriques 41 dans la gaine rigide 30, préférentiellement lorsque la tour de chargement/déchargement 10 est en position horizontale.

L'étape d'installation comprend une étape d'insertion du ou des câbles électriques 41 et des N-1 câbles de support 42 dans la gaine rigide 30 (N étant un nombre entier supérieur ou égal à 2).

Dans une variante, l'étape d'insertion du ou des câbles électriques 41 et des N-1 câbles de support 42 est réalisée avec les câbles 41, 42 et les N dispositifs de support de câble 60 espacés sur le ou les câbles électriques 41, le/les câbles électriques 41 traversant chacun des N dispositifs de support de câble 60 préalablement mis en place. Autrement dit, dans cette variante, les N dispositifs de support de câble sont disposés sur les câbles électriques et reliés aux câbles de support 42. Avantageusement, l'étape d'insertion peut être accompagnée d'une étape de tirage des câbles au moyen de tire-câbles à l'autre extrémité de la gaine rigide.

Dans une autre variante, l'étape d'installation comprend une étape d'insérer, au droit de N ouvertures de la gaine rigide 30, N dispositifs de support de câble 60 espacés sur le ou les câbles électriques 41, le/les câbles électriques 41 traversant chacun des N dispositifs de support de câble 60, et chaque dispositif de support de câble 60 présentant une plus grande dimension extérieure strictement inférieure à un plus grand diamètre intérieur de la gaine rigide 30, et accrocher N-1 câbles de support 42 entre les N dispositifs de support de câble 60.

Grâce à cette caractéristique du procédé d'assemblage, les câbles électriques et les câbles de support sont installés sur la tour de chargement/déchargement lorsqu'elle est en position horizontale, ce qui permet de ne pas augmenter la durée d'installation de la tour dans la cuve.

Dans un mode de réalisation, les N ouvertures de la gaine rigide sont chacune formées par le premier jeu C1 entre deux tronçons 31 adjacents. Avantageusement, le premier jeu C1 est de l'ordre de 30 mm à 50 mm pour permettre l'insertion du dispositif de support de câble. Optionnellement, afin de faciliter la mise en place des dispositifs de support de câble, les câbles peuvent être extraits au niveau de l'ouverture pour positionner le dispositif de support de câble et ré-insérés par l'ouverture.

Dans un autre mode de réalisation, des ouvertures spécifiques sont mises en place. Dans ce mode de réalisation, le procédé d'assemblage comprend :
- préalablement à l'étape d'insérer, au droit de N ouvertures de la gaine rigide 30, N dispositifs de support de câble 60 et N-1 câbles de support 42, une étape de création des N ouvertures de la gaine rigide 30 ;
- après l'étape d'accrocher les N-1 câbles de support 42, une étape de fermeture des N ouvertures de la gaine rigide. La fermeture des ouvertures peut être réalisée par la mise en place d'un couvercle, par exemple soudé, sur chacune des ouvertures. Des soudures discontinues peuvent être envisagées afin de limiter le travail de soudage.

Dans une variante du procédé d'assemblage selon l'invention, l'étape d'insérer le/les câbles électriques 41 et les N-1 câbles de support 42 dans la gaine rigide 30 peut comprendre une étape de tirage du/des câbles électriques 41 et des et N-1 câbles de support 42 à travers au moins une des N ouvertures. Le tirage peut être réalisé par l'utilisation d'un outil de préhension de câble, par exemple un crochet ou une pince, inséré dans la gaine rigide par un opérateur au niveau de l'ouverture de sorte que l'outil vienne en contact avec ledit câble pour que l'opérateur puisse tirer dessus afin d'aider la bonne mise en position du câble dans la gaine rigide.

Il en ressort que les ouvertures ont un double rôle : d'une part, elles forment un passage permettant de tirer les câbles dans la gaine rigide. D'autre part, elles offrent un accès aux dispositifs de support de câble 60 dans la gaine rigide 30 pour que ces derniers puissent facilement être mis en place autour du/des câbles électriques.

Avantageusement, le procédé d'assemblage selon l'invention comprend en outre, après l'étape d'accrocher les câbles de support 42, une étape de maintien des extrémités du ou des câbles électriques 41. Ainsi, lors du transport de la tour de chargement/déchargement, notamment lors du passage de la position horizontale à la position verticale, les câbles et leurs supports sont maintenus en tension afin de s'assurer qu'ils restent bien en place. A cet effet, un système de supports temporaires peut être installé aux extrémités de la gaine rigide. Grâce à cette caractéristique, on évite que les câbles s'entremêlent lors du déplacement de la tour de chargement/déchargement.

Jusqu'ici, on a décrit des modes de réalisation où la tour 10 comporte une pompe 20 et une gaine 30. Il est bien entendu envisageable que la tour 10 comporte plusieurs pompes 20. Dans ce cas, chaque pompe 20 comprend un boîtier 23, et il est associé à chaque boîtier 23 une gaine 30. Chaque gaine 30 peut s'étendre verticalement au-dessus du boîtier 23 correspondant comme on l'a décrit ci-dessus. En variante, une gaine 30 peut être associée à deux pompes 20 voisines. Dans ce cas, la gaine 30 reçoit un premier jeu de câbles électriques 41 pour alimenter une première pompe 20 en électricité et un deuxième jeu de câbles électriques 41 pour alimenter une deuxième pompe 20 en électricité. Par exemple, le premier jeu de câbles électriques 41 est connecté à un premier boîtier 23 que comporte la première pompe 20, et le deuxième jeu de câbles électriques 41 est connecté à un deuxième boîtier 23 que comporte la deuxième pompe 20. La gaine 30 peut s'étendre verticalement au-dessus du premier boîtier 23 ou peut s'étendre verticalement au-dessus du deuxième boîtier 23 ou à mi-distance entre eux.

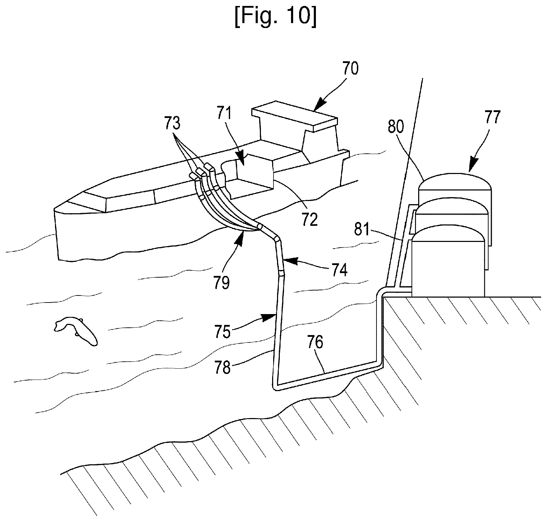

En référence à la figure 10, une vue écorchée d'un navire méthanier 70 montre une cuve étanche et thermiquement isolante 71 de forme générale prismatique montée dans la double coque 72 du navire. La paroi de la cuve 71 comporte une membrane d'étanchéité primaire destinée à être en contact avec le GNL contenu dans la cuve, une membrane d'étanchéité secondaire agencée entre la membrane d'étanchéité primaire et la double coque 72 du navire, et deux barrières thermiquement isolantes agencées respectivement entre la membrane d'étanchéité primaire et la membrane d'étanchéité secondaire et entre la membrane d'étanchéité secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GNL depuis ou vers la cuve 71.

La figure 10 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en œuvre des pompes embarquées dans le navire 70 et/ou des pompes équipant l'installation à terre 77 et/ou des pompes équipant le poste de chargement et de déchargement 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Cuve (1) étanche et thermiquement isolante, la cuve (1) étant ancrée dans une structure porteuse d'un navire, la cuve (1) comportant une tour de chargement/déchargement (10), la tour de chargement/déchargement (10) comportant au moins un mât (11, 12, 13), le au moins un mât (11, 12, 13) s'étendant verticalement dans un espace interne (4) de la cuve (1),
la cuve (1) comportant en outre au moins une pompe (20), la pompe (20) étant solidaire de la tour de chargement/déchargement (10) et comportant un boîtier d'alimentation électrique (23), et une gaine rigide (30) s'étendant verticalement, la gaine rigide (30) étant creuse et recevant au moins un câble électrique (41) connecté au boîtier d'alimentation électrique (23),
**caractérisée en ce que** la gaine rigide (30) comprend une pluralité de tronçons (31) alignés verticalement et fixés à la tour de chargement/déchargement (10), chaque dit tronçon (31) étant tubulaire et étant séparé d'un tronçon adjacent d'un premier jeu (C1).

2. Cuve (1) étanche et thermiquement isolante selon la revendication 1, dans laquelle la tour de chargement/déchargement (10) comporte un unique mât (11), et chaque dit tronçon (31) est fixé au mât (11).

3. Cuve (1) étanche et thermiquement isolante selon la revendication 1, dans laquelle la tour de chargement/déchargement (10) comporte un premier, un deuxième et un troisième mâts (11, 12, 13), espacés les uns des autres, et dans laquelle la tour de chargement/déchargement (10) comporte en outre des traverses (19) fixant les mâts (11, 12, 13) les uns aux autres, et dans laquelle chaque dit tronçon (31) est fixé à au moins deux traverses (19).

4. Cuve (1) étanche et thermiquement isolante selon l'une quelconque des revendications 1 à 3, dans laquelle le premier jeu (C1) est compris entre 5 mm et 50 mm, préférentiellement entre 5 mm et 20 mm, lorsque la cuve (1) est à l'équilibre thermique à 20°C.

5. Cuve (1) étanche et thermiquement isolante selon l'une quelconque des revendications 1 à 4, dans laquelle une extrémité (33) de la gaine rigide (30) en regard du boîtier d'alimentation électrique (23) est séparée du boîtier d'alimentation électrique (23) d'un deuxième jeu (C2), le deuxième jeu (C2) étant compris entre 20 mm et 200 mm lorsque la cuve (1) est à l'équilibre thermique à 20°C.

6. Cuve (1) étanche et thermiquement isolante selon l'une quelconque des revendications 1 à 5, dans laquelle la gaine rigide (30) traverse une paroi de plafond (3) de la structure porteuse et débouche dans une pièce de raccord creuse (50) au-dessus de la paroi de plafond (3), et dans laquelle la gaine rigide (30) reçoit en outre :
- N dispositifs de support de câble (60) espacés, ledit au moins un câble électrique (41) traversant chacun des N dispositifs de support de câble (60), et chaque dispositif de support de câble (60) présentant une plus grande dimension extérieure qui est strictement inférieure à un plus grand diamètre intérieur (D1) de la gaine rigide (30) ;
- N-1 câbles de support (42) accrochés entre les N dispositifs de support de câble (60), où N est un nombre entier supérieur ou égal à 2 ; et
- un câble de support terminal (43) tendu entre un point d'accrochage (49) situé dans la pièce de raccord creuse (50) et le dispositif de support de câble (60) le plus proche de la pièce de raccord creuse (50).

7. Cuve (1) étanche et thermiquement isolante selon la revendication 6, dans laquelle la pièce de raccord creuse (50) comprend un raccord en T (51), le raccord en T (51) comportant une première branche (52) dans le prolongement de la gaine rigide (30) et une deuxième branche (53) orientée perpendiculairement ou obliquement à la gaine rigide (30), le point d'accrochage (49) est situé dans la première branche (52), et ledit au moins un câble électrique (41) traverse la pièce de raccord creuse (50) en sortant par la deuxième branche (53).

8. Procédé d'assemblage pour assembler une cuve (1) étanche et thermiquement isolante, le procédé d'assemblage comprenant les étapes de :
A) ancrer la cuve (1) dans une structure porteuse qui est intégrée dans un navire ;
B) dans un espace interne (4) de la cuve (1), installer :
- une tour de chargement/déchargement (10) comportant au moins un mât (11, 12, 13), le au moins un mât (11, 12, 13) s'étendant verticalement dans un espace interne (4) de la cuve (1), et
- au moins une pompe (20), la pompe (20) étant solidaire de la tour de chargement/déchargement (10) et comportant un boîtier d'alimentation électrique (23), et une gaine rigide (30) s'étendant verticalement, la gaine rigide (30) étant creuse et recevant au moins un câble électrique (41) connecté au boîtier d'alimentation électrique (23), la gaine rigide (30) comprenant une pluralité de tronçons (31) alignés verticalement et fixés à la tour de chargement/déchargement (10), chaque dit tronçon (31) étant tubulaire et étant séparé d'un tronçon adjacent d'un premier jeu (C1) ;
C) connecter ledit au moins un câble électrique (41) au boîtier d'alimentation électrique (23).

9. Procédé d'assemblage selon la revendication 8, dans lequel la tour de chargement/déchargement (10) comporte un unique mât (11, 12, 13), et dans lequel l'étape B) comprend fixer chaque tronçon (31) au mât (11, 12, 13).

10. Procédé d'assemblage selon la revendication 8, dans lequel la tour de chargement/déchargement (10) comporte un premier, un deuxième et un troisième mâts (11, 12, 13), espacés les uns des autres, et la tour de chargement/déchargement (10) comporte en outre des traverses (19) fixant les mâts (11, 12, 13) les uns aux autres, et dans lequel l'étape B) comprend fixer chaque tronçon (31) à au moins deux traverses (19).

11. Procédé d'assemblage selon l'une quelconque des revendications 8 à 10, dans lequel l'étape B) comprend :
- faire traverser à la gaine rigide (30) une paroi de plafond (3) de la structure porteuse, et faire déboucher la gaine rigide (30) dans une pièce de raccord creuse (50) au-dessus de la paroi de plafond (3) ;
- installer N dispositifs de support de câble (60) espacés sur ledit au moins un câble électrique (41), ledit au moins un câble électrique (41) traversant chacun des N dispositifs de support de câble (60), et chaque dispositif de support de câble (60) présentant une plus grande dimension extérieure strictement inférieure à un plus grand diamètre intérieur de la gaine rigide (30), et accrocher N-1 câbles de support (42) entre les N dispositifs de support de câble (60), où N est un nombre entier supérieur ou égal à 2 ;
- insérer ledit au moins un câble électrique (41) muni des N dispositifs de support de câble (60) dans la gaine rigide (30) ; et
- accrocher un câble de support terminal (43) à un point d'accrochage (49) situé dans la pièce de raccord creuse (50) et au dispositif de support de câble (60) le plus proche de la pièce de raccord creuse (50).

12. Procédé d'assemblage selon l'une quelconque des revendications 8 à 10, comprenant, préalablement à l'étape B) une étape d'installation du au moins un câble électrique (41) dans la gaine rigide (30), préférentiellement lorsque la tour de chargement/déchargement (10) est en position horizontale.

13. Procédé d'assemblage selon la revendication 12, dans lequel l'étape d'installation du au moins un câble électrique (41) dans la gaine rigide (30) comprend :
- Insérer le au moins un câble électrique (41) et N-1 câbles de support (42) dans la gaine rigide (30), où N est un nombre entier supérieur ou égal à 2 ;
- Insérer, au droit de N ouvertures de la gaine rigide (30), N dispositifs de support de câble (60) espacés sur ledit au moins un câble électrique (41), ledit au moins un câble électrique (41) traversant chacun des N dispositifs de support de câble (60), et chaque dispositif de support de câble (60) présentant une plus grande dimension extérieure strictement inférieure à un plus grand diamètre intérieur de la gaine rigide (30), et accrocher les N-1 câbles de support (42) entre les N dispositifs de support de câble (60) ;
et après l'étape B), la gaine rigide (30) débouchant dans une pièce de raccord creuse (50) au-dessus d'une paroi de plafond (3) de la structure porteuse, une étape d'accrocher un câble de support terminal (43) à un point d'accrochage (49) situé dans la pièce de raccord creuse (50) et au dispositif de support de câble (60) le plus proche de la pièce de raccord creuse (50).

14. Procédé d'assemblage selon la revendication 13, dans lequel les N ouvertures de la gaine rigide sont formées par le premier jeu (C1) entre deux tronçons (31) adjacents.

15. Procédé d'assemblage selon la revendication 13, comprenant :
- préalablement à l'étape d'insérer, au droit de N ouvertures de la gaine rigide (30), N dispositifs de support de câble (60) et N-1 câbles de support (42), une étape de création des N ouvertures de la gaine rigide (30) ;
- après l'étape d'accrocher les N-1 câbles de support (42), une étape de fermeture des N ouvertures de la gaine rigide.

16. Procédé d'assemblage selon l'une quelconque des revendications 13 à 15, dans lequel l'étape d'insérer le au moins un câble électrique (41) et les N-1 câbles de support (42) dans la gaine rigide (30) comprend une étape de tirage du au moins un câble électrique (41) et des et N-1 câbles de support (42) à travers au moins une des N ouvertures.

17. Procédé d'assemblage selon l'une quelconque des revendications 13 à 16, comprenant en outre, après l'étape d'accrocher les N-1 câbles de support (42), une étape de maintien des extrémités du au moins un câble électrique (41).

18. Procédé d'assemblage selon l'une quelconque des revendications 11 à 17, dans lequel la pièce de raccord creuse (50) comprend un raccord en T (51), le raccord en T (51) comportant une première branche (52) dans le prolongement de la gaine rigide (30) et une deuxième branche (53) orientée perpendiculairement ou obliquement à la gaine rigide (30), le point d'accrochage (49) est situé dans la première branche (52), et dans lequel, à l'étape B), ledit au moins un câble électrique (41) muni des N dispositifs de support de câble (60) est inséré dans la gaine rigide (30) par la première branche (52), puis une extrémité du câble électrique (41) opposée au boîtier d'alimentation électrique (23) est extraite de la pièce de raccord creuse (50) par la deuxième branche (53).

19. Procédé d'assemblage selon la revendication 18, comprenant en outre obturer la première branche (52) après avoir inséré ledit au moins un câble électrique (41) muni des N dispositifs de support de câble (60) dans la gaine rigide (30).

20. Procédé d'assemblage selon l'une quelconque des revendications 8 à 19, dans lequel à l'issue de l'étape B), une extrémité (33) de la gaine rigide (30) en regard du boîtier d'alimentation électrique (23) est séparée du boîtier d'alimentation électrique (23) d'un deuxième jeu (C2).

21. Navire (70) pour le transport d'un gaz liquéfié, le navire comportant une double coque (72) et une cuve (71) selon l'une quelconque des revendications 1 à 7 disposée dans la double coque.

22. Navire (70) selon la revendication 21, dans lequel la cuve (71) est selon l'une quelconque des revendications 5 à 6 et dans lequel la pièce de raccord creuse (50) est disposée au-dessus d'un pont (6) du navire situé au-dessus de la paroi de plafond (3) de la structure porteuse.

23. Système de transfert pour un gaz liquéfié, le système comportant un navire (70) selon l'une quelconque des revendications 21 à 22, des canalisations isolées (73, 79, 76, 81) agencées de manière à relier la cuve (71) installée dans la coque du navire à une installation de stockage flottante ou terrestre (77) et une pompe pour entraîner un flux de gaz liquéfié à travers les canalisations isolées depuis ou vers l'installation de stockage flottante ou terrestre vers ou depuis la cuve du navire.

24. Procédé de chargement ou déchargement d'un navire (70) selon l'une quelconque des revendications 21 à 22, dans lequel on achemine un gaz liquéfié à travers des canalisations isolées (73, 79, 76, 81) depuis ou vers une installation de stockage flottante ou terrestre (77) vers ou depuis la cuve (71) du navire (70).

## Patentansprüche

1. Dichter und wärmeisolierender Tank (1), wobei der Tank (1) in einer tragenden Struktur eines Schiffes verankert ist, wobei der Tank (1) einen Lade-/Entladeturm (10) umfasst, wobei der Lade-/Entladeturm (10) mindestens einen Mast (11, 12, 13) umfasst, wobei sich der mindestens eine Mast (11, 12, 13) vertikal in einem Innenraum (4) des Tanks (1) erstreckt,
wobei der Tank (1) ferner mindestens eine Pumpe (20) umfasst, wobei die Pumpe (20) an dem Lade-/Entladeturm (10) befestigt ist und ein Stromversorgungsgehäuse (23) sowie eine sich vertikal erstreckende starre Hülle (30) umfasst, wobei die starre Hülle (30) hohl ist und mindestens ein elektrisches Kabel (41) aufnimmt, das mit dem Stromversorgungsgehäuse (23) verbunden ist,
**dadurch gekennzeichnet, dass** die starre Hülle (30) eine Vielzahl von Abschnitten (31) umfasst, die vertikal ausgerichtet und an dem Lade-/Entladeturm (10) befestigt sind, wobei jeder Abschnitt (31) rohrförmig ist und wobei es von einem benachbarten Abschnitt durch eine erste Lücke (C1) getrennt ist.

2. Dichter und wärmeisolierender Tank (1) nach Anspruch 1, wobei der Lade-/Entladeturm (10) einen einzelnen Mast (11) umfasst und jeder Abschnitt (31) am Mast (11) befestigt ist.

3. Dichter und wärmeisolierender Tank (1) nach Anspruch 1, wobei der Be-/Entladeturm (10) einen ersten, einen zweiten und einen dritten Mast (11, 12, 13) umfasst, die voneinander beabstandet sind, und wobei der Be-/Entladeturm (10) ferner Querträger (19) umfasst, die die Masten (11, 12, 13) aneinander befestigen, und wobei jeder Abschnitt (31) an mindestens zwei Querträgern (19) befestigt ist.

4. Dichter und wärmeisolierender Tank (1) nach einem der Ansprüche 1 bis 3, wobei der erste Spalt (C1) zwischen 5 mm und 50 mm, vorzugsweise zwischen 5 mm und 20 mm beträgt, wenn sich der Tank (1) im thermischen Gleichgewicht bei 20°C befindet.

5. Dichter und thermisch isolierender Tank (1) nach einem der Ansprüche 1 bis 4, wobei ein dem Stromversorgungsgehäuse (23) zugewandtes Ende (33) der starren Hülle (30) durch einen zweiten Spalt (C2) vom Stromversorgungsgehäuse (23) getrennt ist, wobei der zweite Spalt (C2) zwischen 20 mm und 200 mm beträgt, wenn sich der Tank (1) bei 20°C im thermischen Gleichgewicht befindet.

6. Dichter und wärmeisolierender Tank (1) nach einem der Ansprüche 1 bis 5, wobei die starre Hülle (30) durch eine Deckenwand (3) der tragenden Struktur verläuft und in einem hohlen Verbindungsstück (50) über der Deckenwand (3) austritt, und wobei die starre Hülle (30) ferner Folgendes aufnimmt:
- N Kabeltragvorrichtungen (60), die voneinander beabstandet sind, wobei das mindestens eine Elektrokabel (41) durch jede der N Kabeltragvorrichtungen (60) verläuft und jede Kabeltragvorrichtung (60) eine größere Außenabmessung aufweist, die strikt kleiner ist als ein größerer Innendurchmesser (D1) der starren Hülle (30);
- N-1 Tragkabel (42), die zwischen den N Kabeltragvorrichtungen (60) befestigt sind, wobei N eine ganze Zahl größer oder gleich 2 ist; und - ein Anschlusstragkabel (43), das zwischen einem Befestigungspunkt (49) im hohlen Verbindungsstück (50) und der Kabeltragvorrichtung (60) gespannt ist, die dem hohlen Verbindungsstück (50) am nächsten ist.

7. Dichter und wärmeisolierender Tank (1) nach Anspruch 6, wobei das hohle Kupplungsstück (50) eine T-Kupplung (51) umfasst, wobei die T-Kupplung (51) einen ersten Zweig (52) in der Verlängerung der starren Hülle (30) und einen zweiten Zweig (53) umfasst, der rechtwinklig oder schräg zur starren Hülle (30) ausgerichtet ist, wobei sich der Befestigungspunkt (49) im ersten Zweig (52) befindet und wobei das mindestens eine elektrische Kabel (41) durch das hohle Kupplungsstück (50) verläuft und durch den zweiten Zweig (53) austritt.

8. Montageverfahren zum Zusammenbau einer dichter und wärmeisolierenden Tank (1), wobei das Montageverfahren die folgenden Schritte umfasst:
A) Verankerung des Tanks (1) in einer Tragstruktur, die in ein Schiff eingebaut ist;
B) in einem Innenraum (4) des Tanks (1) Installieren von:
- einem Lade-/Entladeturm (10), der mindestens einen Mast (11, 12, 13) umfasst, wobei sich der mindestens eine Mast (11, 12, 13) vertikal in einem Innenraum (4) des Tanks (1) erstreckt, und - mindestens einer Pumpe (20), wobei die Pumpe (20) an dem Lade-/Entladeturm (10) befestigt ist und ein Stromversorgungsgehäuse (23) und eine vertikal verlaufende starre Hülle (30) umfasst, wobei die starre Hülle (30) hohl ist und mindestens ein mit dem Stromversorgungsgehäuse (23) verbundenes Stromkabel (41) aufnimmt, wobei die starre Hülle (30) mehrere Abschnitte (31) umfasst, die vertikal ausgerichtet und an dem Lade-/Entladeturm (10) befestigt sind, wobei jeder Abschnitt (31) rohrförmig ist und durch einen ersten Spalt (C1) von einem benachbarten Abschnitt getrennt ist;
C) Verbinden des mindestens einen elektrischen Kabels (41) mit dem Gehäuse (23) der elektrischen Stromversorgung.

9. Montageverfahren nach Anspruch 8, wobei der Lade-/Entladeturm (10) einen einzelnen Mast (11, 12, 13) umfasst und wobei der Schritt B) das Befestigen jedes Abschnitts (31) am Mast (11, 12, 13) umfasst.

10. Montageverfahren nach Anspruch 8, wobei der Lade-/Entladeturm (10) einen ersten, einen zweiten und einen dritten Mast (11, 12, 13) umfasst, die voneinander beabstandet sind, und wobei der Lade-/Entladeturm (10) ferner Querträger (19) umfasst, die die Masten (11, 12, 13) aneinander befestigen, und wobei der Schritt B) das Befestigen jedes Abschnitts (31) an mindestens zwei Querträgern (19) umfasst.

11. Montageverfahren nach einem der Ansprüche 8 bis 10, wobei Schritt B) Folgendes umfasst:
- Durchführen einer Deckenwand (3) der Tragstruktur durch die starre Hülle (30) und Austreten der starren Hülle (30) in einem hohlen Verbindungsstück (50) über der Deckenwand (3);
- Installieren von N Kabelhalterungen (60) im Abstand voneinander an dem mindestens einen Elektrokabel (41), wobei das mindestens eine Elektrokabel (41) durch jede der N Kabelhalterungen (60) verläuft und jede Kabelhalterung (60) einen größeren Außendurchmesser aufweist, der deutlich kleiner ist als der größere Innendurchmesser der starren Hülle (30), und Anbringen von N - 1 Halterungskabeln (42) zwischen den N Kabelhalterungen (60), wobei N eine ganze Zahl größer oder gleich 2 ist;
- Einführen des mindestens einen Elektrokabels (41), das mit den N Kabelhalterungen (60) versehen ist, in die starre Hülle (30); und
- Befestigen eines Anschlussstützkabels (43) an einem Befestigungspunkt (49), der sich im hohlen Kupplungsstück (50) befindet, und an der Kabelstützvorrichtung (60), die dem hohlen Kupplungsstück (50) am nächsten liegt.

12. Montageverfahren nach einem der Ansprüche 8 bis 10, das vor Schritt B) einen Schritt der Installation des mindestens einen Elektrokabels (41) in der starren Hülle (30) umfasst, vorzugsweise wenn sich der Lade-/Entladeturm (10) in horizontaler Position befindet.

13. Montageverfahren nach Anspruch 12, wobei der Schritt des Einbaus des mindestens einen elektrischen Kabels (41) in die starre Hülle (30) umfasst:
- Einführen des mindestens einen Elektrokabels (41) und von N-1 Stützkabeln (42) in die starre Hülle (30), wobei N eine ganze Zahl größer oder gleich 2 ist;
- Einsetzen von N Kabelstützvorrichtungen (60) in einer Linie mit N Öffnungen der starren Hülle (30) in Abständen auf dem mindestens einen Elektrokabel (41), wobei das mindestens eine Elektrokabel (41) durch jede der N Kabelstützvorrichtungen (60) verläuft und jede Kabelstützvorrichtung (60) eine größere Außenabmessung aufweist, die deutlich kleiner ist als ein größerer Innendurchmesser der starren Hülle (30), und Anbringen der N-1 Stützkabel (42) zwischen den N Kabelstützvorrichtungen (60);
und nach dem Schritt B), bei dem die starre Hülle (30) in einem hohlen Kupplungsstück (50) über einer Deckenwand (3) der Tragstruktur austritt, ein Schritt zum Befestigen eines Anschlussstützkabels (43) an einem Befestigungspunkt (49), der sich im hohlen Kupplungsstück (50) befindet, und an der Kabelstützvorrichtung (60), die dem hohlen Kupplungsstück (50) am nächsten ist.

14. Montageverfahren nach Anspruch 13, wobei die N Öffnungen der starren Hülle durch den ersten Spalt (C1) zwischen zwei benachbarten Abschnitten (31) gebildet werden.

15. Montageverfahren nach Anspruch 13, umfassend:
- vor dem Schritt des Einführens von N Kabelstützvorrichtungen (60) und N-1 Stützkabeln (42) in einer Linie mit N Öffnungen der starren Hülle (30) ein Schritt des Erzeugens der N Öffnungen der starren Hülle (30);
- nach dem Schritt des Anbringens der N-1 Stützkabel (42) ein Schritt des Schließens der N Öffnungen der starren Hülle.

16. Montageverfahren nach einem der Ansprüche 13 bis 15, wobei der Schritt des Einführens des mindestens einen Elektrokabels (41) und der N-1 Stützkabel (42) in die starre Hülle (30) einen Schritt des Ziehens des mindestens einen Elektrokabels (41) und der N-1 Stützkabel (42) durch mindestens eine der N Öffnungen umfasst.

17. Montageverfahren nach einem der Ansprüche 13 bis 16, das nach dem Schritt des Anbringens der N-1 Stützkabel (42) außerdem einen Schritt des Haltens der Enden des mindestens einen Elektrokabels (41) umfasst.

18. Montageverfahren nach einem der Ansprüche 11 bis 17, wobei das hohle Kupplungsstück (50) eine T-Kupplung (51) umfasst, wobei die T-Kupplung (51) einen ersten Zweig (52) in Verlängerung der starren Hülle (30) und einen zweiten Zweig (53) umfasst, der rechtwinklig oder schräg zur starren Hülle (30) ausgerichtet ist, wobei sich der Befestigungspunkt (49) im ersten Zweig (52) befindet, und wobei im Schritt B) das mindestens eine mit den N Kabelhalterungsvorrichtungen (60) versehene Elektrokabel (41) durch den ersten Zweig (52) in die starre Hülle (30) eingeführt wird, dann ein Ende des Elektrokabels (41) gegenüber dem Gehäuse (23) der elektrischen Stromversorgung durch den zweiten Zweig (53) aus dem hohlen Kupplungsstück (50) herausgezogen wird.

19. Montageverfahren nach Anspruch 18, das außerdem das Blockieren des ersten Zweigs (52) umfasst, nachdem das mindestens eine mit den N Kabelstützvorrichtungen (60) versehene Elektrokabel (41) in die starre Hülle (30) eingeführt wurde.

20. Montageverfahren nach einem der Ansprüche 8 bis 19, wobei am Ende des Schrittes B) ein dem Stromversorgungsgehäuse (23) zugewandtes Ende (33) der starren Hülle (30) durch einen zweiten Spalt (C2) vom Stromversorgungsgehäuse (23) getrennt ist.

21. Schiff (70) zum Transport eines verflüssigten Gases, wobei das Schiff einen Doppelrumpf (72) und einen im Doppelrumpf angeordneten Tank (1) gemäß einem der Ansprüche 1 bis 7 umfasst.

22. Schiff (70) nach Anspruch 21, wobei der Tank (1) einem der Ansprüche 5 oder 6 entspricht und wobei das hohle Kupplungsstück (50) über einem Deck (6) des Schiffes angeordnet ist, das sich über der Deckenwand (3) der Tragstruktur befindet.

23. Transfersystem für verflüssigtes Gas, wobei das System ein Schiff (70) gemäß einem der Ansprüche 21 und 22, isolierte Rohrleitungen (73, 79, 76, 81), die so angeordnet sind, dass sie den im Rumpf des Schiffes installierten Tank (1) mit einer schwimmenden oder an Land befindlichen Lagereinrichtung (77) verbinden, und eine Pumpe zum Fördern eines Stroms verflüssigten Gases durch die isolierten Rohrleitungen von oder zu der schwimmenden oder an Land befindlichen Lagereinrichtung zum oder vom Tank des Schiffes umfasst.

24. Verfahren zum Be- oder Entladen eines Schiffes (70) nach einem der Ansprüche 21 oder 22, wobei ein verflüssigtes Gas durch die isolierten Rohrleitungen (73, 79, 76, 81) von oder zu einer schwimmenden oder landseitigen Lageranlage (77) zum oder vom Tank (1) des Schiffes (70) befördert wird.

## Claims

1. Sealed and thermally insulating tank (1), the tank (1) being anchored in a bearing structure of a ship, the tank (1) comprising a loading/offloading tower (10), the loading/offloading tower (10) comprising at least one mast (11, 12, 13), the at least one mast (11, 12, 13) extending vertically in an internal space (4) of the tank (1), the tank (1) further comprising at least one pump (20), the pump (20) being secured to the loading/offloading tower (10) and comprising an electrical power supply housing (23), and a rigid sheath (30) extending vertically, the rigid sheath (30) being hollow and receiving at least one electric cable (41) connected to the electrical power supply housing (23),
**characterized in that** the rigid sheath (30) comprises a plurality of sections (31) that are aligned vertically and fixed to the loading/offloading tower (10), each said section (31) being tubular and being separated from an adjacent section by a first gap (C1).

2. Sealed and thermally insulating tank (1) according to Claim 1, wherein the loading/offloading tower (10) comprises a single mast (11), and each said section (31) is fixed to the mast (11).

3. Sealed and thermally insulating tank (1) according to Claim 1, wherein the loading/offloading tower (10) comprises a first, a second and a third masts (11, 12, 13), spaced apart from one another, and wherein the loading/offloading tower (10) further comprises crossmembers (19) fixing the masts (11, 12, 13) to one another, and wherein each said section (31) is fixed to at least two crossmembers (19).

4. Sealed and thermally insulating tank (1) according to any one of Claims 1 to 3, wherein the first gap (C1) is between 5 mm and 50 mm, preferentially between 5 mm and 20 mm, when the tank (1) is in thermal equilibrium at 20°C.

5. Sealed and thermally insulating tank (1) according to any one of Claims 1 to 4, wherein an end (33) of the rigid sheath (30) facing the electrical power supply housing (23) is separated from the electrical power supply housing (23) by a second gap (C2), the second gap (C2) being between 20 mm and 200 mm when the tank (1) is in thermal equilibrium at 20°C.

6. Sealed and thermally insulating tank (1) according to any one of Claims 1 to 5, wherein the rigid sheath (30) passes through a ceiling wall (3) of the bearing structure and emerges in a hollow coupling piece (50) above the ceiling wall (3), and wherein the rigid sheath (30) further receives:
- N cable support devices (60) that are spaced apart, said at least one electric cable (41) passing through each of the N cable support devices (60), and each cable support device (60) having a greater outer dimension which is strictly less than a greater inner diameter (D1) of the rigid sheath (30) ;
- N-1 support cables (42) attached between the N cable support devices (60), in which N is an integer number greater than or equal to 2; and
- a terminal support cable (43) stretched between an attachment point (49) situated in the hollow coupling piece (50) and the cable support device (60) closest to the hollow coupling piece (50).

7. Sealed and thermally insulating tank (1) according to Claim 6, wherein the hollow coupling piece (50) comprises a T-coupling (51), the T-coupling (51) comprising a first branch (52) in the extension of the rigid sheath (30) and a second branch (53) oriented at right angles or obliquely to the rigid sheath (30), the attachment point (49) is situated in the first branch (52), and said at least one electric cable (41) passes through the hollow coupling piece (50) by exiting through the second branch (53).

8. Assembly method for assembling a sealed and thermally insulating tank (1), the assembly method comprising the steps of:
A) anchoring the tank (1) in a bearing structure which is incorporated in a ship;
B) in an internal space (4) of the tank (1), installing:
- a loading/offloading tower (10) comprising at least one mast (11, 12, 13), the at least one mast (11, 12, 13) extending vertically in an internal space (4) of the tank (1), and
- at least one pump (20), the pump (20) being secured to the loading/offloading tower (10) and comprising an electrical power supply housing (23), and a rigid sheath (30) extending vertically, the rigid sheath (30) being hollow and receiving at least one electric cable (41) connected to the electrical power supply housing (23), the rigid sheath (30) comprising a plurality of sections (31) that are aligned vertically and fixed to the loading/offloading tower (10), each said section (31) being tubular and being separated from an adjacent section by a first gap (C1) ;
C) connecting said at least one electric cable (41) to the electrical power supply housing (23).

9. Assembly method according to Claim 8, wherein the loading/offloading tower (10) comprises a single mast (11, 12, 13), and wherein the step B) comprises fixing each section (31) to the mast (11, 12, 13).

10. Assembly method according to Claim 8, wherein the loading/offloading tower (10) comprises a first, a second and a third masts (11, 12, 13), spaced apart from one another, and the loading/offloading tower (10) further comprises crossmembers (19) fixing the masts (11, 12, 13) to one another, and wherein the step B) comprises fixing each section (31) to at least two crossmembers (19).

11. Assembly method according to any one of Claims 8 to 10, wherein the step B) comprises:
- making a ceiling wall (3) of the bearing structure pass through the rigid sheath (30), and making the rigid sheath (30) emerge in a hollow coupling piece (50) above the ceiling wall (3);
- installing N cable support devices (60) spaced apart on said at least one electric cable (41), said at least one electric cable (41) passing through each of the N cable support devices (60), and each cable support device (60) having a greater outer dimension strictly less than a greater inner diameter of the rigid sheath (30), and attaching N-1 support cables (42) between the N cable support devices (60), in which N is an integer number greater than or equal to 2;
- inserting said at least one electric cable (41) provided with the N cable support devices (60) in the rigid sheath (30); and
- attaching a terminal support cable (43) to an attachment point (49) situated in the hollow coupling piece (50) and to the cable support device (60) closest to the hollow coupling piece (50).

12. Assembly method according to any one of Claims 8 to 10, comprising, prior to the step B), a step of installation of the at least one electric cable (41) in the rigid sheath (30), preferentially when the loading/offloading tower (10) is in a horizontal position.

13. Assembly method according to Claim 12, wherein the step of installation of the at least one electric cable (41) in the rigid sheath (30) comprises:
- inserting the at least one electric cable (41) and N-1 support cables (42) in the rigid sheath (30), in which N is an integer number greater than or equal to 2;
- inserting, in line with N openings of the rigid sheath (30), N cable support devices (60) spaced apart on said at least one electric cable (41), said at least one electric cable (41) passing through each of the N cable support devices (60), and each cable support device (60) having a greater outer dimension strictly less than a greater inner diameter of the rigid sheath (30), and attaching the N-1 support cables (42) between the N cable support devices (60) ;
and after the step B), the rigid sheath (30) emerging in a hollow coupling piece (50) above a ceiling wall (3) of the bearing structure, a step of attaching a terminal support cable (43) to an attachment point (49) situated in the hollow coupling piece (50) and to the cable support device (60) closest to the hollow coupling piece (50).

14. Assembly method according to Claim 13, wherein the N openings of the rigid sheath are formed by the first gap (C1) between two adjacent sections (31).

15. Assembly method according to Claim 13, comprising:
- prior to the step of inserting, in line with N openings of the rigid sheath (30), N cable support devices (60) and N-1 support cables (42), a step of creation of the N openings of the rigid sheath (30) ;
- after the step of attaching the N-1 support cables (42), a step of closure of the N openings of the rigid sheath.

16. Assembly method according to any one of Claims 13 to 15, wherein the step of inserting the at least one electric cable (41) and the N-1 support cables (42) in the rigid sheath (30) comprises a step of pulling the at least one electric cable (41) and the N-1 support cables (42) through at least one of the N openings.

17. Assembly method according to any one of Claims 13 to 16, further comprising, after the step of attaching the N-1 support cables (42), a step of holding the ends of the at least one electric cable (41).

18. Assembly method according to any one of Claims 11 to 17, wherein the hollow coupling piece (50) comprises a T-coupling (51), the T-coupling (51) comprising a first branch (52) in the extension of the rigid sheath (30) and a second branch (53) oriented at right angles or obliquely to the rigid sheath (30), the attachment point (49) is situated in the first branch (52), and wherein, in the step B), said at least one electric cable (41) provided with the N cable support devices (60) is inserted in the rigid sheath (30) through the first branch (52), then an end of the electric cable (41) opposite the electrical power supply housing (23) is extracted from the hollow coupling piece (50) through the second branch (53).

19. Assembly method according to Claim 18, further comprising blocking the first branch (52) after having inserted said at least one electric cable (41) provided with the N cable support devices (60) in the rigid sheath (30).

20. Assembly method according to any one of Claims 8 to 19, wherein, at the end of the step B), an end (33) of the rigid sheath (30) facing the electrical power supply housing (23) is separated from the electrical power supply housing (23) by a second gap (C2).

21. Ship (70) for transporting a liquefied gas, the ship comprising a double hull (72) and a tank (1) according to any one of Claims 1 to 7 disposed in the double hull.

22. Ship (70) according to Claim 21, wherein the tank (1) is according to either one of Claims 5 or 6 and wherein the hollow coupling piece (50) is disposed above a deck (6) of the ship situated above the ceiling wall (3) of the bearing structure.

23. Transfer system for a liquefied gas, the system comprising a ship (70) according to either one of Claims 21 and 22, insulated pipelines (73, 79, 76, 81) arranged so as to link the tank (1) installed in the hull of the ship to a floating or onshore storage installation (77) and a pump for driving a flow of liquefied gas through the insulated pipelines from or to the floating or onshore storage installation to or from the tank of the ship.

24. Method for loading or offloading a ship (70) according to either one of Claims 21 and 22, wherein a liquefied gas is conveyed through the insulated pipelines (73, 79, 76, 81) from or to a floating or onshore storage installation (77) to or from the tank (1) of the ship (70).
